(19) Europäisches Patentamt
European Patent Office
Office européen des brevets

(11) **EP 2 981 794 B1**

(12) **FASCICULE DE BREVET EUROPEEN**

(45) Date de publication et mention
de la délivrance du brevet:
**07.03.2018 Bulletin 2018/10**

(51) Int Cl.:
***G01F 25/00*** *(2006.01)* ***G01F 23/14*** *(2006.01)*
***G01F 23/16*** *(2006.01)*

(21) Numéro de dépôt: **14723726.7**

(22) Date de dépôt: **04.04.2014**

(86) Numéro de dépôt international:
**PCT/EP2014/056874**

(87) Numéro de publication internationale:
**WO 2014/162006 (09.10.2014 Gazette 2014/41)**

(54) **PROCÉDÉ D'ÉTALONNAGE D'UN CAPTEUR DE NIVEAU**

VERFAHREN ZUR KALIBRIERUNG EINES FÜLLSTANDSSENSORS

METHOD OF CALIBRATING A LEVEL SENSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.04.2013 FR 1353044**

(43) Date de publication de la demande:
**10.02.2016 Bulletin 2016/06**

(73) Titulaire: **AREVA NP**
**92400 Courbevoie (FR)**

(72) Inventeurs:
• **MESTIVIER, William**
**F-78960 VOISINS LE BRETONNEUX (FR)**
• **SERRANO, Sylvain**
**F-78800 Houilles (FR)**

(74) Mandataire: **Lavoix**
**2, place d'Estienne d'Orves**
**75441 Paris Cedex 09 (FR)**

(56) Documents cités:
FR-A1- 2 694 622 US-A- 3 640 117
US-A- 4 465 088 US-A1- 2004 149 031

EP 2 981 794 B1

**Description**

L'invention concerne en général les capteurs de niveau, notamment des capteurs de niveau à flotteur.

Plus précisément, l'invention concerne un procédé d'étalonnage d'un capteur de niveau, le capteur comprenant :

- un tube délimitant un espace interne, le tube étant plongé dans un volume de liquide, l'espace interne présentant une partie inférieure communiquant avec le volume de liquide par une ouverture ménagée dans le tube, la partie inférieure étant remplie par le liquide, une partie supérieure de l'espace interne n'étant pas remplie par le liquide et étant séparée de la partie inférieure par une surface libre du liquide ;
- un dispositif de mesure du niveau de la surface libre le long du tube;

le procédé étant du type comprenant l'étape suivante :

- mettre la partie supérieure de l'espace interne à une pression prédéterminée.

GB-1 533 655 décrit un capteur à flotteur formant un détecteur de niveau. Le flotteur flotte à la surface libre du liquide. Le capteur présente en outre un dispositif prévu pour détecter que le flotteur arrive à un seuil bas dans le tube. Il réalise ainsi une mesure « Tout Ou Rien » contrairement au dispositif décrit plus haut. GB 1 533 655 décrit en outre une procédure permettant de tester le bon fonctionnement du capteur, dans laquelle la partie supérieure de l'espace interne du tube est mise sous pression, de manière à faire descendre le flotteur jusqu'à son seuil bas.

US-4 465 088 décrit un capteur de niveau minimal dans une chaudière et un procédé permettant de tester le bon fonctionnement du capteur sans avoir besoin de vidanger une partie de la chaudière. Ce procédé consiste à créer artificiellement une baisse de niveau dans un tube entourant le capteur par injection de gaz dans la partie supérieure de l'espace interne du tube de manière à faire baisser le niveau d'eau jusqu'au déclenchement du signal indiquant le seuil bas du capteur.

FR-2 694 622 décrit également un procédé de contrôle du fonctionnement d'un capteur de niveau, ce capteur détectant un niveau d'eau maximal dans une chaudière à vapeur en surpression. Le procédé consiste, à l'inverse du procédé précédent, à produire une dépression en laisser échapper de la vapeur contenue dans un tube entourant le capteur pour faire monter le niveau d'eau dans le tube jusqu'au déclenchement du signal de niveau maximal.

De tels procédés sont adaptés pour tester le bon fonctionnement d'un détecteur de niveau de type « Tout Ou Rien », mais pas pour réaliser l'étalonnage d'un capteur de niveau à flotteur, prévu pour mesurer le niveau du flotteur le long du tube de façon analogique (mesure continue).

Dans ce contexte, l'invention vise à proposer un procédé d'étalonnage d'un capteur de niveau, qui soit simple et facile de mise en oeuvre.

A cette fin, l'invention porte sur un procédé d'étalonnage d'un capteur de niveau selon la revendication 1. Mettre la partie supérieure de l'espace interne à la pression prédéterminée permet de modifier le niveau de liquide dans le tube. La surface libre se déplace ainsi à l'intérieur du tube. La différence de niveau entre la surface libre du liquide à l'extérieur du tube et la surface libre du liquide à l'intérieur du tube est calculée en fonction de la pression prédéterminée. Cette différence de niveau permet à son tour d'évaluer le niveau théorique de la surface libre le long du tube. Ce niveau théorique est comparé avec le niveau mesuré par le dispositif de mesure, et ceci permet de vérifier, en répétant ces opérations pour plusieurs pressions prédéterminées, si le capteur fonctionne correctement, et notamment si les niveaux mesurés par le dispositif de mesure sont cohérents avec les niveaux théoriques calculés.

On entend ici par procédé d'étalonnage un procédé visant à contrôler l'exactitude des mesures quantitatives de niveau fournies par le capteur de niveau. Dans GB 1 533 655 et FR-2 694 622 le procédé vise simplement à détecter si le capteur réagit quand le flotteur atteint son seuil bas ou haut.

Le tube est généralement d'orientation verticale. Il peut présenter toute sorte de section interne, par exemple une section circulaire ou ovale ou rectangulaire, etc... Il est typiquement partiellement immergé dans le volume de liquide, un tronçon inférieur du tube étant plongé dans le volume de liquide et un tronçon supérieur faisant saillie au-dessus de la surface libre du liquide.

L'ouverture par laquelle la partie inférieure de l'espace interne communique avec le volume de liquide correspond typiquement à une extrémité inférieure ouverte du tube. En variante, l'ouverture est une fenêtre découpée latéralement dans le tube.

L'ouverture est de taille suffisante pour permettre une circulation du liquide entre l'intérieur et l'extérieur du tube, de telle sorte que quand la partie supérieure de l'espace interne du tube est à pression ambiante, le niveau de liquide dans le tube est le même que dans le reste du volume.

Le liquide est typiquement de l'eau, éventuellement avec des additifs mais pourrait être de toute autre sorte.

La pression prédéterminée dans la partie supérieure de l'espace interne est choisie de manière à déplacer le niveau de liquide dans l'espace interne du tube jusque dans la plage de mesure normale du dispositif de mesure. Typiquement, la pression prédéterminée est supérieure à la pression de l'atmosphère hors du tube, de manière à faire baisser le niveau de liquide dans le tube. En variante, la pression prédéterminée est inférieure à la pression à l'extérieur du tube, de manière à faire monter le niveau de liquide dans le tube. Dans ce cas, on utilise typiquement une pompe à vide pour mettre la partie supérieure du volume interne à la pression prédéterminée. Ceci permet de tester toute la plage de mesure du capteur, même si le niveau de liquide à l'extérieur du tube est loin du niveau nominal.

La pression prédéterminée est donc typiquement supérieure à la pression de gaz à la surface libre du volume de liquide à l'extérieur du tube. Elle est inférieure à la pression de la colonne de liquide prise entre l'ouverture et la surface libre de liquide à l'extérieur du tube.

Typiquement, elle est comprise entre 0 et 5 bars absolus, de préférence entre 1 et 3 bars absolus. Elle est ajustée en fonction de la hauteur de liquide dans la piscine.

Le tube est un tube étanche, au sens où il ne présente pas d'autres orifices entre l'ouverture mettant en communication la partie inférieure de l'espace interne avec le volume de liquide, et l'entrée de fluide permettant de mettre la partie supérieure de l'espace interne sous pression.

Pour le calcul du niveau théorique de la surface libre, la pression prédéterminée permet d'évaluer la différence entre le niveau de la surface libre à l'intérieur du tube et le niveau de la surface libre du liquide en dehors du tube. Cette pression prédéterminée est continuellement corrigée par la température du fluide considéré, fournie par un ou des capteurs dédiés, et par la pression de l'enceinte considérée, fournie par un ou des capteurs dédiés. Le dispositif de mesure fournit quant à lui le niveau de la surface libre par rapport à un point de référence, qui peut être le bas du tube, ou le niveau de l'ouverture, ou tout autre point. Pour effectuer la comparaison entre le niveau théorique et le niveau mesuré, on prend en compte également le niveau de la surface libre du liquide dans le volume par rapport au point de référence du dispositif de mesure. Cette grandeur est acquise de toute façon adaptée. Elle est par exemple évaluée par calcul, en mettant sous pression la partie supérieure de l'espace interne, comme décrit plus bas. En variante, elle est évaluée à l'aide d'un moyen de mesure de niveau temporaire, elle est récupérée dans un calculateur ou elle est considérée comme connue.

Typiquement, l'étalonnage du capteur est considéré comme satisfaisant si l'écart entre le niveau théorique et le niveau mesuré est inférieur à une limite prédéterminée, en valeur absolue.

Selon une caractéristique avantageuse de l'invention, le capteur de niveau est un capteur à flotteur, comprenant un flotteur disposé dans l'espace interne du tube et flottant à la surface libre du liquide, le dispositif de mesure étant prévu pour mesurer un niveau du flotteur le long du tube.

Le flotteur est typiquement un corps de densité inférieure à celle du liquide, qui flotte à la surface libre du liquide et est libre de se déplacer dans l'espace interne du tube. Il suit le niveau de la surface libre du liquide.

Le dispositif de mesure du niveau du flotteur le long du tube est de tout type adapté. Il permet de mesurer quantitativement la distance suivant l'axe du tube entre un point de référence et le flotteur. Le dispositif de mesure peut être de type magnétique, constitué d'un flotteur contenant un aimant coulissant autour d'un dispositif de mesure contenant des interrupteurs à lame souple réagissant au passage de l'aimant. L'ouverture/fermeture des interrupteurs permet la mesure du niveau.

En variante, le dispositif de mesure peut également être externe au tube, le flotteur étant de ce fait libre à l'intérieur du tube.

Alternativement, le capteur de niveau n'est pas du type à flotteur mais est du type capacitif, ou du type à dispersion thermique ou est un radar filoguidé.

Selon une caractéristique avantageuse de l'invention, la partie supérieure de l'espace interne est mise sous pression par injection d'un gaz. Ce gaz est typiquement de l'air.

Ceci permet d'ajuster la pression dans la partie supérieure de l'espace interne, de manière rapide et précise. Le gaz provient d'une source de gaz sous pression. Par exemple, il provient d'un compresseur ou d'une bouteille de gaz sous pression, raccordée à l'espace interne par l'intermédiaire d'un détendeur. La pression du gaz insufflé dans l'espace interne est réglable.

Selon une autre caractéristique avantageuse de l'invention, la partie supérieure de l'espace interne est mise successivement à une pluralité de pressions prédéterminées différentes les unes des autres, les étapes de calcul d'un niveau théorique de la surface libre le long du tube, d'acquisition du niveau mesuré de la surface libre mesuré par le dispositif de mesure, et de comparaison du niveau théorique et du niveau mesuré, étant répétées pour chacune desdites pressions prédéterminées.

Ainsi, le procédé permet d'étalonner le capteur sur une large plage de niveau. De préférence, les pressions déterminées sont choisies pour permettre de tester toute la plage de mesure du capteur de niveau. Certaines pressions prédéterminées correspondent alors à des niveaux de la surface libre proches de la borne supérieure, d'autres à des niveaux de la surface libre proches de la borne inférieure et d'autres encore à des niveaux intermédiaires.

Il est par exemple possible de faire augmenter par palier la pression dans la partie supérieure du volume interne et de répéter à chaque palier les étapes de calcul du niveau théorique et d'acquisition du niveau mesuré. Il est possible également de procéder en sens inverse, et de faire décroître la pression prédéterminée par palier, en réalisant à chaque palier un calcul de niveau théorique et une acquisition de niveau mesuré.

Selon une autre caractéristique avantageuse de l'invention, le procédé comprend une opération préalable de détermination d'un point zéro, ladite opération préalable comprenant :

- une étape de mise de la partie supérieure de l'espace interne à une pression de référence telle que le liquide soit chassé de l'espace interne jusqu'au niveau de l'ouverture ménagée dans le tube ;
- une étape de calcul d'une différence de niveau de référence entre une surface libre du liquide hors du tube et l'ouverture, en fonction de la pression de référence.

En d'autres termes, le point de référence pour le capteur de niveau correspond ici au niveau de l'ouverture. La pression de référence est typiquement la pression à laquelle on voit apparaître des bulles de gaz sortant par l'ouverture du tube.

De manière à détecter l'apparition des bulles de gaz en étant à distance du capteur (notamment dans le cas où le capteur est installé dans une piscine de réacteur nucléaire ou de stockage de combustible), une caméra est avantageusement disposée en regard de l'ouverture du tube et transmets des images de l'ouverture du tube par exemple dans une salle de commande à distance de la piscine.

Alternativement, l'apparition des bulles de gaz peut être détectée en suivant la courbe de pression injectée dans le tube : l'augmentation sera régulière jusqu'à l'apparition de bulles, moment à partir duquel la variation de pression ne sera plus régulière, la pente de la courbe présentant une « cassure ».

Plus précisément, l'étape de calcul du niveau théorique de la surface libre le long du tube comprend les sous-étapes suivantes :

- calculer une différence de niveau de liquide entre l'espace interne du tube et le volume de liquide en fonction de la pression prédéterminée,
- calcul du niveau de liquide dans l'espace interne du tube par rapport à l'ouverture, en fonction de ladite différence de niveau et d'une différence de niveau de référence entre une surface libre du volume de liquide hors du tube et l'ouverture.

Comme indiqué ci-dessus, en effet, il est nécessaire de connaître le niveau de liquide hors du tube au-dessus du point de référence du capteur, pour pouvoir comparer le niveau théorique de la surface libre du liquide le long du tube (à l'intérieur de celui-ci) et le niveau mesuré de ladite surface libre. Le point de référence est typiquement l'ouverture. Le niveau de la surface libre du liquide hors du tube par rapport à l'ouverture est connu par l'intermédiaire d'autres capteurs redondants du même type, ou de tout autre moyen de mesure temporaire. En variante, la différence de niveau de référence est déterminée au cours de l'opération préalable de détermination du point zéro.

Une telle évaluation est à la fois commode et précise et permet d'obtenir une excellente fiabilité du procédé d'étalonnage.

En variante, le procédé ne comporte pas l'opération préalable.

Suivant une autre caractéristique avantageuse de l'invention, l'étape préalable de détermination du point zéro comprend une étape de vérification que le capteur de niveau indique un niveau mesuré minimum (niveau zéro) à ladite pression de référence. Le niveau minimum correspond au bas de la plage de mesure du capteur.

Une telle opération préalable peut être suivie d'une étape de recalage du zéro du niveau minimum du capteur de niveau.

Selon une autre caractéristique avantageuse de l'invention, le procédé comprend en outre une étape d'acquisition d'une température du liquide dans le volume de liquide et/ou d'une pression de gaz au-dessus du volume de liquide, ladite température de liquide et/ou ladite pression de gaz étant utilisée à l'étape de calcul du niveau théorique de la surface libre le long du tube.

En effet, l'étape de calcul du niveau théorique de la surface libre prend en compte typiquement une valeur de la densité de liquide. Cette densité est fonction de la pression de gaz au-dessus du volume de liquide et de la température du liquide. La connaissance de cette température et/ou de cette pression permet d'augmenter la précision de l'étalonnage. Quand le volume de liquide est une piscine d'un réacteur nucléaire, plusieurs mesures redondantes de la température de liquide et de la pression de gaz au-dessus du volume de liquide sont disponibles. Il est possible d'utiliser seulement les valeurs de température ou seulement les valeurs de pression. Il est possible également d'utiliser des grandeurs prédéterminées pour la température et/ou la pression, ou encore d'utiliser une valeur de densité prédéterminée.

Selon un autre aspect avantageux de l'invention, le tube comporte un évent mettant en communication la partie supérieure de l'espace interne du tube avec l'atmosphère quand le capteur de niveau est en fonctionnement, la partie supérieure de l'espace interne étant mise sous pression pendant l'étalonnage par raccordement de l'évent à une source de gaz sous pression.

L'évent met normalement en communication l'espace interne du tube avec l'atmosphère, ce qui permet d'aspirer ou de chasser de l'air en fonction des variations de niveau de liquide dans le volume. Le procédé utilise donc un évent préexistant, ce qui est particulièrement commode et économique.

En variante, la partie supérieure de l'espace interne est mis sous pression via un autre orifice, par exemple un raccord dédié à l'étalonnage.

Selon une autre caractéristique avantageuse de l'invention, le procédé comporte une étape de vérification du temps de réponse du capteur de niveau, effectuée en modifiant rapidement la pression de la partie supérieure de l'espace interne et en suivant l'évolution dans le temps du niveau mesuré par le capteur de niveau.

Typiquement, cette étape est effectuée en cassant la pression dans la partie supérieure de l'espace interne à la fin du procédé d'étalonnage, de manière à ramener cette pression rapidement au niveau de la pression de gaz au-dessus du volume de liquide. Il est également possible de créer un créneau de pression dans la partie supérieure de l'espace interne, par augmentation ou diminution de la pression. Afin de déterminer le temps de réponse, l'acquisition de la mesure du capteur de niveau est nécessaire afin de déterminer précisément la durée nécessaire pour atteindre un pourcentage déterminé (typiquement 63% ou autre valeur adaptée) de l'amplitude du créneau de pression.

Le procédé d'étalonnage est particulièrement adapté quand le volume de liquide est une piscine d'un réacteur nucléaire. La piscine peut être une piscine réacteur, une piscine de stockage de combustible, ou tout autre type de piscine. Le liquide est dans ce cas de l'eau, comportant des additifs tels que du bore. Dans ce cas, le procédé est particulièrement avantageux car il peut être appliqué pendant que le réacteur est en fonctionnement et/ou que le combustible nucléaire est présent dans la piscine. Il ne nécessite pas de démonter le dispositif de mesure pour l'étalonner en laboratoire. Il ne nécessite pas non plus de vidange et de remplissage de la piscine, ce qui est long et génère des effluents. Les doses de radiation reçues par le personnel d'intervention sont faibles dans le cas du procédé de l'invention car l'étalonnage se fait essentiellement à distance du capteur. Le procédé peut toutefois être appliqué à d'autres volumes de liquide, par exemple des cuves, dans un réacteur nucléaire ou dans un autre type d'installation. Le procédé améliore également la sécurité du personnel d'intervention car aucun montage/démontage n'est nécessaire, ce qui limite les risques d'accident associés.

D'autres caractéristiques et avantages de l'invention ressortiront de la description détaillée qui en est donnée ci-dessous, à titre indicatif et nullement limitatif, en référence aux figures annexées, parmi lesquelles :

- la figure 1 est une représentation schématique, en coupe, de la piscine d'un réacteur nucléaire équipée d'un capteur de niveau à flotteur ;
- la figure 2 est un logigramme représentant schématiquement l'opération préalable de détermination du point zéro du capteur et
- la figure 3 est un logigramme représentant de manière schématique les principales étapes du procédé de l'invention.

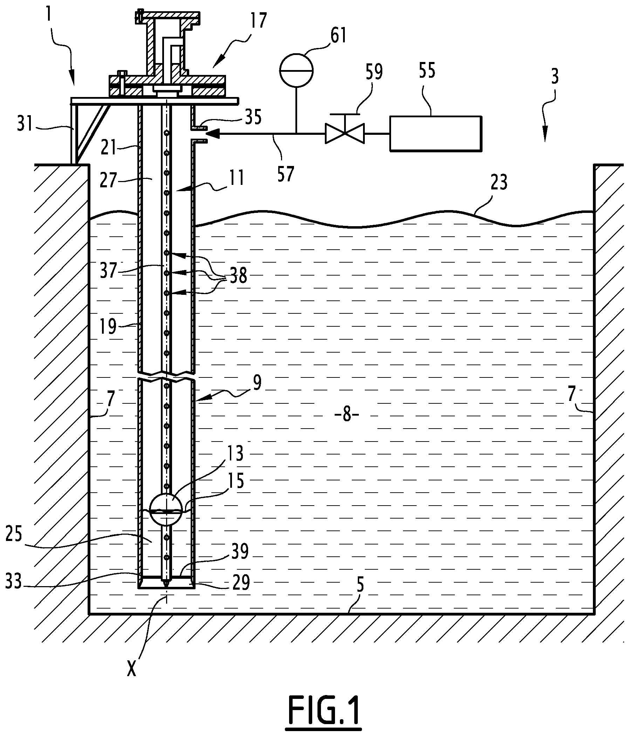

Le procédé de l'invention est destiné à l'étalonnage d'un capteur 1 à flotteur agencé pour mesurer le niveau de liquide dans un volume 3. Dans l'exemple représenté sur la figure 1, le volume 3 est une piscine d'un réacteur nucléaire. La piscine est délimitée par un fond 5 et des parois latérales 7 et est ouverte vers le haut. Le liquide 8 contenu dans la piscine est de l'eau comportant différents additifs tels que de l'acide borique. La piscine 3 est logée dans un bâtiment, non représenté, la pression de gaz au-dessus de la piscine, à l'intérieur du bâtiment, étant contrôlée à une valeur déterminée et connue. La température du liquide dans la piscine est mesurée par des sondes non représentées.

Le capteur de niveau 1 comprend :

- un tube 9 délimitant un espace interne 11, le tube 9 étant plongé dans le liquide 8;
- un flotteur 13, disposé dans l'espace interne 11 du tube et flottant à une surface libre 15 du liquide à l'intérieur du tube ;
- un dispositif 17 de mesure du niveau du flotteur 13 le long du tube 9.

Comme visible sur la figure 1, le tube présente un tronçon inférieur 19 plongé dans le volume de liquide 8, et un tronçon supérieur 21 en saillie au-dessus de la surface libre 23 du volume de liquide. Ainsi, l'espace interne 11 présente une partie inférieure 25 remplie par le liquide et une partie supérieure 27 non remplie par le liquide.

La partie inférieure 25 communique avec le volume de liquide 8 par l'intermédiaire d'une ouverture 29.

Le tube 9 présente ici un axe central X d'orientation sensiblement verticale. Le tronçon supérieur 21 est rigidement fixé à la paroi latérale 7 de la piscine par l'intermédiaire d'un support 31. Le tube 9 est creux, de section droite sensiblement constante, circulaire dans l'exemple représenté. L'ouverture 29 est ici délimitée par une extrémité libre inférieure 33 du tube.

Le tube 9 comporte encore un évent 35, ménagé dans le tronçon supérieur 21, au-dessus de la surface libre 23 du liquide à l'extérieur du tube. L'évent 35 met en communication la partie supérieure 27 de l'espace interne du tube avec l'atmosphère du bâtiment.

Le flotteur 13 est ici une boule en un ou plusieurs matériaux choisis de telle sorte que la densité du flotteur 13 soit inférieure à la densité du liquide.

Le dispositif de mesure 17 comporte une tige 37 de guidage du flotteur, et des détecteurs 38 agencés sur toute la longueur de la tige 37 pour déterminer la position du flotteur suivant l'axe X, le long du tube. La tige 37 s'étend selon l'axe X. Elle est rigidement fixée par une extrémité supérieure au support 31 et par une extrémité libre inférieure à l'extrémité inférieure 33 du tube 9. Elle est raccordée à l'extrémité 33 par des entretoises rigides 39, agencées pour ne pas bloquer la circulation du fluide à travers l'ouverture 29. Le flotteur 13 présente un passage central s'étendant selon un diamètre du flotteur 13, dans lequel la tige 37 est engagée. Le flotteur 13 est libre de coulisser le long de la tige 37, en suivant librement le niveau de liquide à l'intérieur de l'espace interne 11. Les détecteurs 38 (interrupteurs à lame souple) agencés sur toute la longueur de la tige 37 sont régulièrement répartis, avec une distance entre chaque détecteur précisément constante. L'aimant intégré dans le flotteur 13 permet de réaliser la mesure de la position du flotteur 13 en fonction des détecteurs 38 actionnés par l'aimant.

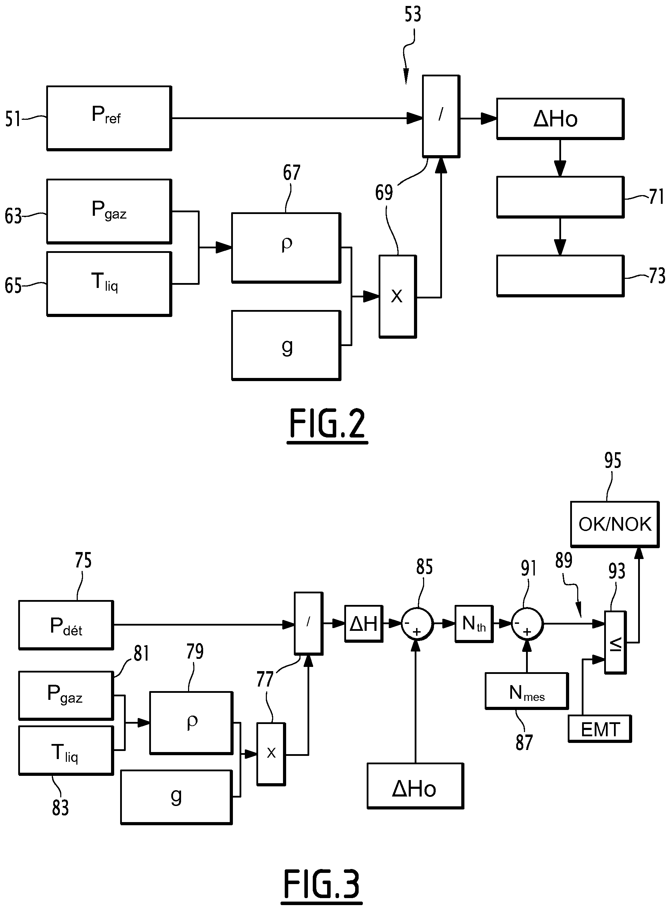

Le procédé d'étalonnage de l'invention est représenté sur les figures 2 et 3.

Comme illustré sur la figure 2, il comporte de préférence une opération préalable de détermination du point zéro du capteur de niveau, effectuée avant l'étalonnage du capteur tel que représenté sur la figure 3.

L'opération préalable comprend :

- une étape 51 de mise de la partie supérieure 27 de l'espace interne à une pression de référence $P_{ref}$ telle que le liquide soit chassé de l'espace interne jusqu'au niveau de l'ouverture 29 ménagée dans le tube ;
- une étape 53 de calcul d'une différence de niveau de référence ΔHo entre une surface libre du liquide hors du tube 9 et l'ouverture 29, en fonction de la pression de référence $P_{ref}$ établie à l'étape 51.

Comme illustré sur la figure 1, la partie supérieure 27 de l'espace interne est mise sous pression en raccordant l'évent 35 à une source de pression 55. La source de pression 55 est par exemple un compresseur ou une bouteille de gaz sous pression. Elle est raccordée à l'évent 35 par l'intermédiaire d'une ligne 57 sur laquelle sont intercalées un organe 59 de réglage de la pression et un organe 61 de mesure de la pression à l'intérieur du conduit 57 en aval de l'organe 59. L'organe 59 est adapté pour régler la pression de gaz dans la partie supérieure 27 de l'espace interne.

La pression de référence $P_{ref}$ est déterminée en augmentant progressivement la pression de gaz dans la partie supérieure de l'espace interne, par action sur l'organe 59. L'augmentation de la pression est interrompue dès que des remontées de bulles apparaissent. Ces bulles correspondent à du gaz s'échappant par l'ouverture 29, située à l'extrémité inférieure du tube.

La pression de référence $P_{ref}$ correspond à la différence de hauteur de colonne d'eau entre la surface libre de liquide 23, et l'ouverture 29. La différence de niveau entre la surface libre 23 et l'ouverture 29 est calculée à l'étape 53 en utilisant l'équation suivante :

$$\Delta Ho = P_{réf}/(\rho.g)$$

où $P_{réf}$ est la pression de référence, ΔHo la différence de niveau de référence entre la surface libre 23 et l'ouverture 29, p est la masse volumique du liquide et g la constante gravitationnelle.

L'étape 53 comprend les sous-étapes suivantes :

- sous-étapes 63 et 65 d'acquisition de la pression de gaz $P_{gaz}$ dans l'enceinte au-dessus de la surface libre 23 du liquide, et de la température $T_{liq}$ du liquide dans la piscine ;
- sous-étape 67 de calcul de la masse volumique p du liquide, en fonction des valeurs de $P_{gaz}$ et $T_{liq}$ acquises aux sous-étapes 63 et 65 ;

- sous-étape 69 de calcul de ΔHo, à l'aide de l'équation ci-dessus en fonction de la masse volumique p déterminée à la sous étape 67.

La masse volumique est calculée à l'aide de tables ou d'algorithmes prédéterminés, qui sont spécifiques en fonction de la composition du liquide.

L'étape 53 est généralement suivie d'une étape de vérification 71 du point zéro du capteur. La partie supérieure de l'espace interne est maintenue à $P_{ref}$. Le niveau mesuré par le capteur est relevé. On vérifie alors que le niveau correspond au niveau minimum mesurable par le capteur de niveau, c'est-à-dire au bas de la plage de mesure (niveau zéro).

Si le niveau mesuré n'est pas égal au niveau minimum mesurable, le point zéro du capteur peut être corrigé par un décalage dans le contrôle commande auquel est connecté le dispositif de mesure 17 (étape 73). Il peut également être le signe d'une défaillance du dispositif de mesure 17 ce qui peut conduire à un remplacement du capteur de niveau 1.

Selon le procédé d'étalonnage de l'invention, l'ensemble des étapes représentées sur la figure 3 est répété plusieurs fois, la partie supérieure de l'espace interne étant mise à une pression prédéterminée différente à chaque itération. Seule une itération sera décrite ci-dessous.

Comme illustré sur la figure 3, la partie supérieure 27 de l'espace interne 11 est mise à une pression prédéterminée $P_{dét}$ (étape 75 sur la figure 3). On utilise typiquement pour cela le même dispositif qu'au cours de l'opération préalable. La pression prédéterminée est inférieure à la pression de référence. On calcule ensuite à l'étape 77 la différence de niveau entre la surface libre 23 du liquide à l'extérieur du tube et le flotteur 13. Cette valeur ΔH est calculée à l'aide de l'équation suivante :

$$\Delta H = P_{dét}/(\rho.g)$$

où ΔH est ladite différence de niveau, $P_{dét}$ est la pression prédéterminée imposée dans la partie supérieure 27 de l'espace interne, p est la masse volumique du liquide et g est la constante gravitationnelle.

Comme pour l'opération préalable, la masse volumique p est calculée à l'étape 79 après acquisition de la pression de gaz dans l'enceinte au-dessus de la surface libre 23 du liquide et de la température de liquide dans la piscine (étapes 81 et 83).

Le niveau théorique $N_{th}$ du flotteur 13 est ensuite déterminé à l'étape 85, à l'aide de l'équation suivante :

$$N_{th} = \Delta Ho - \Delta H$$

Le niveau théorique $N_{th}$ du flotteur 13 corres-

pond à l'écartement suivant l'axe X entre le flotteur 13 et l'ouverture 29.

La valeur de ΔHo utilisée est celle qui a été déterminée au cours de l'opération préalable, représentée sur la figure 2.

A l'étape 87, on acquiert le niveau mesuré $N_{mes}$ du flotteur 13, mesuré par le capteur de niveau 1. Cette étape est effectuée après correction éventuelle du point zéro du capteur de niveau 1 à l'étape 73. Puis, à l'étape 89 on compare le niveau théorique $N_{th}$ au niveau mesuré $N_{mes}$. Pour ce faire, on fait la différence entre les deux valeurs de niveau (étape 91) et on compare la différence à un écart maximal toléré EMT prédéterminé (étape 93). Si cette différence est inférieure en valeur absolue à l'écart maximal toléré EMT, on considère que l'étalonnage à cette pression est satisfaisant (OK à l'étape 95). Si l'écart est supérieur à la valeur EMT, on considère que l'étalonnage n'est pas satisfaisant à la valeur de pression considérée (NOK à l'étape 95). Dans ce cas, le point zéro du capteur peut être corrigé par un décalage dans le contrôle commande auquel est connecté le dispositif de mesure 17. Il peut également être le signe d'une défaillance du dispositif de mesure 17 ce qui peut conduire à un remplacement du capteur de niveau 1.

**Revendications**

1. Procédé d'étalonnage d'un capteur de niveau, le capteur (1) comprenant :

   - un tube (9) délimitant un espace interne (11), le tube (9) étant plongé dans un volume de liquide (3), l'espace interne (11) présentant une partie inférieure (25) communiquant avec le volume de liquide (3) par une ouverture (29) ménagée dans le tube (9), la partie inférieure (25) étant remplie par le liquide, une partie supérieure (27) de l'espace interne (11) n'étant pas remplie par le liquide et étant séparée de la partie inférieure par une surface libre (15) du liquide ;
   - un dispositif (17) de mesure d'un niveau de la surface libre (15) le long du tube (9);

   le procédé comprenant les étapes suivantes :

   - mettre la partie supérieure (27) de l'espace interne (11) à une pression prédéterminée ($P_{dét}$);
   - acquérir le niveau mesuré ($N_{mes}$) de la surface libre (15) mesuré par le dispositif de mesure (17) ;

   **caractérisé en ce que** le procédé comprend en outre les étapes suivantes :

   - calculer un niveau théorique ($N_{th}$) de la surface libre (15) le long du tube (9) en fonction de la pression prédéterminée ($P_{dét}$);

   - comparer le niveau théorique ($N_{th}$) et le niveau mesuré ($N_{mes}$);
   - répéter les étapes de calcul d'un niveau théorique ($N_{th}$), acquisition d'un niveau mesuré ($N_{mes}$) et comparaison du niveau théorique et mesuré après avoir mis la partie supérieure de l'espace interne à au moins une seconde pression prédéterminée.

2. Procédé d'étalonnage selon la revendication 1, **caractérisé en ce que** le capteur de niveau est un capteur à flotteur, comprenant un flotteur (13) disposé dans l'espace interne (11) du tube (9) et flottant à la surface libre (15) du liquide, le dispositif de mesure étant prévu pour mesurer un niveau du flotteur (13) le long du tube (9).

3. Procédé d'étalonnage selon la revendication 1 ou 2, **caractérisé en ce que** la partie supérieure (27) de l'espace interne (11) est mise sous pression par injection d'un gaz.

4. Procédé d'étalonnage selon l'une quelconque des revendications précédentes, **caractérisé en ce que** la partie supérieure (27) de l'espace interne (11) est mise successivement à une pluralité de pressions prédéterminées différentes les unes des autres, les étapes de calcul d'un niveau théorique ($N_{th}$) de la surface libre (15) le long du tube (11), d'acquisition du niveau mesuré ($N_{mes}$) de la surface libre (15) mesuré par le dispositif de mesure (17), et de comparaison du niveau théorique ($N_{th}$) et du niveau mesuré ($N_{mes}$), étant répétées pour chacune desdites pressions prédéterminées.

5. Procédé d'étalonnage selon l'une quelconque des revendications précédentes, **caractérisé en ce que** le procédé comprend une opération préalable de détermination d'un point zéro, ladite opération préalable comprenant :

   - une étape de mise de la partie supérieure (27) de l'espace volume interne (11) à une pression de référence ($P_{ref}$) telle que le liquide soit chassé de l'espace interne (11) jusqu'au niveau de l'ouverture (29) ménagée dans le tube (11);
   - une étape de calcul d'une différence de niveau de référence (ΔHo) entre une surface libre du volume de liquide (3) hors du tube (9) et l'ouverture (29) en fonction de la pression de référence ($P_{ref}$).

6. Procédé d'étalonnage selon la revendication 5, **caractérisé en ce que** l'opération préalable de détermination du point zéro comprend une étape de vérification que le capteur de niveau (1) indique un niveau mesuré minimum à ladite pression de référence ($P_{ref}$).

**7.** Procédé d'étalonnage selon l'une quelconque des revendications précédentes, **caractérisé en ce que** l'étape de calcul du niveau théorique ($N_{th}$) de la surface libre (15) le long du tube (9) comprend les sous-étapes suivantes :

    - calcul d'une différence de niveau ($\Delta H$) de liquide entre l'espace interne (11) du tube (9) et le volume de liquide (3) en fonction de la pression prédéterminée ($P_{dét}$),
    - calcul du niveau de liquide dans l'espace interne (11) du tube (9) par rapport à l'ouverture (29), en fonction de ladite différence de niveau ($\Delta H$) et d'une différence de niveau de référence ($\Delta Ho$) entre une surface libre du volume de liquide (3) hors du tube (9) et l'ouverture (29).

**8.** Procédé d'étalonnage selon l'une quelconque des revendications précédentes, **caractérisé en ce que** le procédé comprend en outre une étape d'acquisition d'une température ($T_{liq}$) du liquide dans le volume de liquide (3) et/ou d'une pression ($P_{gaz}$) de gaz au dessus du volume de liquide (3), ladite température de liquide ($T_{liq}$) et/ou ladite pression de gaz ($P_{gaz}$) étant utilisées à l'étape de calcul du niveau théorique ($N_{th}$) de la surface libre (15) le long du tube (9).

**9.** Procédé d'étalonnage selon l'une quelconque des revendications précédentes, **caractérisé en ce que** le tube (9) comporte un évent (35) mettant en communication la partie supérieure (27) de l'espace interne (11) du tube (9) avec l'atmosphère quand le capteur de niveau (1) est en fonctionnement, la partie supérieure (27) de l'espace interne (11) étant mise sous pression pendant l'étalonnage par raccordement de l'évent (35) à une source de gaz sous pression (55).

**10.** Procédé d'étalonnage selon l'une quelconque des revendications précédentes, **caractérisé en ce que** le procédé comporte une étape de vérification du temps de réponse du capteur de niveau (1), effectuée en modifiant rapidement la pression de la partie supérieure (27) de l'espace interne (11) et en suivant l'évolution dans le temps du niveau mesuré par le capteur de niveau (1).

**11.** Procédé d'étalonnage selon l'une quelconque des revendications précédentes, **caractérisé en ce que** le volume de liquide (3) est une piscine d'un réacteur nucléaire.

**Patentansprüche**

**1.** Kalibrierverfahren für einen Füllstandssensor, wobei der Sensor (1) umfasst:

    - ein Rohr (9), das einen Innenraum (11) begrenzt, wobei das Rohr (9) in ein Flüssigkeitsvolumen (3) eingetaucht ist und der Innenraum (11) einen unteren Bereich (25) aufweist, der über eine in dem Rohr (9) eingearbeitete Öffnung (29) mit dem Flüssigkeitsvolumen (3) kommuniziert, wobei der untere Bereich (25) mit der Flüssigkeit gefüllt ist und ein oberer Bereich (27) des Innenraums (11) nicht mit der Flüssigkeit gefüllt ist und von dem unteren Bereich durch eine freie Oberfläche (15) der Flüssigkeit getrennt ist;
    - eine Messvorrichtung (17) des Pegels der freien Fläche (15) längs des Rohrs (9);

wobei das Verfahren die folgenden Schritte umfasst:

    - Setzen des oberen Bereichs (27) des Innenraums (11) unter einen vorbestimmten Druck ($P_{dét}$);
    - Beschaffen des gemessenen Pegels ($N_{mes}$) der freien Fläche (15), der von der Messvorrichtung (17) gemessen wird;

**dadurch gekennzeichnet, dass** das Verfahren außerdem die folgenden Schritte umfasst:

    - Berechnen eines theoretischen Pegels ($N_{th}$) der freien Fläche (15) längs des Rohrs (9) in Abhängigkeit von dem vorbestimmten Druck ($P_{dét}$);
    - Vergleichen des theoretischen Pegels ($N_{th}$) mit dem gemessenen Pegel ($N_{mes}$);
    - Wiederholen der Schritte des Berechnens des theoretischen Pegels ($N_{th}$), des Beschaffens eines gemessenen Pegels ($N_{mes}$) und des Vergleichens des theoretischen Pegels und des gemessenen Pegels, nachdem der obere Bereich des Innenraums unter mindestens einen zweiten vorbestimmten Druck gesetzt wurde.

**2.** Kalibrierverfahren nach Anspruch 1, **dadurch gekennzeichnet, dass** der Füllstandssensor ein Schwimmsensor ist, der einen Schwimmer (13) umfasst, der in dem Innenraum (11) des Rohrs (9) angeordnet ist und auf der freien Fläche (15) der Flüssigkeit schwimmt, wobei die Messvorrichtung vorgesehen ist, einen Pegel des Schwimmers (13) längs des Rohrs (9) zu messen.

**3.** Kalibrierverfahren nach Anspruch 1 oder 2, **dadurch gekennzeichnet, dass** der obere Bereich (27) des Innenraums (11) durch Injizieren eines Gases unter Druck gesetzt wird.

**4.** Kalibrierverfahren nach einem beliebigen der vorhergehenden Ansprüche, **dadurch gekennzeichnet, dass** der obere Bereich (27) des Innenraums (11) aufeinanderfolgend unter eine Mehrzahl von vorbestimmten, zueinander unterschiedlichen Drücken gesetzt wird, wobei die Schritte des Berechnens eines theoretischen Pegels ($N_{th}$) der freien Fläche (15) längs des Rohrs (9), des Beschaffens des gemessenen Pegels ($N_{mes}$) der freien Fläche (15), gemessen von der Messvorrichtung (17), und des Vergleichens des theoretischen Pegels ($N_{th}$) und des gemessenen Pegels ($N_{mes}$) für jeden der vorbestimmten Drücke wiederholt werden.

5. Kalibrierverfahren nach einem beliebigen der vorhergehenden Ansprüche, **dadurch gekennzeichnet, dass** das Verfahren eine vorherige Operation der Bestimmung eines Nullpunkts umfasst, wobei die vorhergehende Operation umfasst:

   - einen Schritt des unter einen Referenzdruck ($P_{ref}$) Setzens des oberen Bereichs (27) des Innenraums (11) derart, dass die Flüssigkeit aus dem Innenraum (11) bis zu dem Niveau der in dem Rohr (9) eingearbeiteten Öffnung (29) herausgedrückt wird;
   - einen Schritt des Berechnens einer Differenz eines Referenzpegels ($\Delta Ho$) zwischen einer freien Fläche des Flüssigkeitsvolumens (3) außerhalb des Rohrs (9) und der Öffnung (29) in Abhängigkeit von dem Referenzdruck ($P_{ref}$).

6. Kalibrierverfahren nach Anspruch 5, **dadurch gekennzeichnet, dass** die vorherige Operation zur Bestimmung des Nullpunkts einen Überprüfungsschritt umfasst, dass der Füllstandssensor (1) einen minimalen gemessenen Pegel bei dem Referenzdruck ($P_{ref}$) anzeigt.

7. Kalibrierverfahren nach einem beliebigen der vorhergehenden Ansprüche, **dadurch gekennzeichnet, dass** der Schritt des Berechnens des theoretischen Pegels ($N_{th}$) der freien Fläche (15) längs des Rohrs (9) die folgenden Unterschritte umfasst:

   - Berechnen einer Differenz des Pegels ($\Delta H$) der Flüssigkeit zwischen dem Innenraum (11) des Rohrs (9) und dem der Flüssigkeitsvolumen (3) abhängig von dem vorbestimmten Druck ($P_{dét}$),
   - Berechnen des Pegels der Flüssigkeit in dem Innenraum (11) des Rohrs (9) in Bezug auf die Öffnung (29) in Abhängigkeit von der Pegeldifferenz ($\Delta H$) und einer Differenz des Referenzpegels ($\Delta Ho$) zwischen einer freien Fläche des Flüssigkeitsvolumens (3) außerhalb des Rohrs (9) und der Öffnung (29).

8. Kalibrierverfahren nach einem beliebigen der vorhergehenden Ansprüche, **dadurch gekennzeichnet, dass** das Verfahren außerdem einen Schritt des Beschaffens einer Temperatur ($T_{liq}$) der Flüssigkeit in dem Flüssigkeitsvolumen (3) und/oder eines Drucks ($P_{gaz}$) des Gases oberhalb des Flüssigkeitsvolumens (3) umfasst, wobei die Temperatur der Flüssigkeit ($T_{liq}$) und/oder der Druck des Gases ($P_{gaz}$) bei dem Schritt des Berechnens des theoretischen Pegels ($N_{th}$) der freien Fläche (15) längs des Rohrs (9) verwendet werden.

9. Kalibrierverfahren nach einem beliebigen der vorhergehenden Ansprüche, **dadurch gekennzeichnet, dass** das Rohr (9) eine Entlüftungsöffnung (35) aufweist, die den oberen Bereich (27) des Innenraums (11) des Rohrs mit der Atmosphäre verbindet, wenn der Füllstandssensor (1) in Betrieb ist, wobei der obere Bereich (27) des Innenraums (11) während der Kalibrierung durch Anschließen der Entlüftungsöffnung (35) an eine unter Druck stehende Gasquelle (55) unter Druck gesetzt wird.

10. Kalibrierverfahren nach einem beliebigen der vorhergehenden Ansprüche, **dadurch gekennzeichnet, dass** das Verfahren einen Schritt des Überprüfens der Ansprechzeit des Füllstandssensors (1) aufweist, der durchgeführt wird, indem schnell der Druck des oberen Bereichs (27) des Innenraums (11) geändert wird und indem die zeitliche Veränderung des von dem Füllstandssensor (1) gemessenen Pegels verfolgt wird.

11. Kalibrierverfahren nach einem beliebigen der vorhergehenden Ansprüche, **dadurch gekennzeichnet, dass** das Flüssigkeitsvolumen (3) ein Becken eines Nuklearreaktors ist.

**Claims**

1. A method of calibrating a level sensor, the sensor (1) comprising:

   - a tube (9) delimiting an inner space (11), the tube (9) being submerged in a volume of liquid (3), the inner space (11) having a lower part (25) communicating with the liquid volume (3) through an opening (29) arranged in the tube (9), the lower part (25) being filled with the liquid, an upper part (27) of the inner space (11) not being filled with the liquid and being separated from the lower part by a free surface (15) of the liquid;
   - a device (17) for measuring the level of the free surface (15) along the tube (9);

   the method comprising the following steps:

   - placing the upper part (27) of the inner space (11) at a predetermined pressure ($P_{det}$);
   - acquiring the measured level ($N_{mes}$) of the free

surface (15) measured by the measuring device (17);

**characterized in that** the method further comprises the following steps:

- computing a theoretical level ($N_{th}$) of the free surface (15) along the tube (9) based on the determined pressure ($P_{det}$);
- comparing the theoretical level ($N_{th}$) and the measured level ($N_{mes}$);
- repeating the steps for computing a theoretical level ($N_{th}$), acquiring a measured level ($N_{mes}$) and comparing the theoretical and measured levels after placing the upper part of the inner space at least at a second predetermined pressure.

2. The calibration method according to claim 1, **characterized in that** the level sensor is a float sensor, comprising a float (13) positioned in the inner space (11) of the tube (9) and floating on the free surface (15) of the liquid, the measuring device being provided to measure a level of the float (13) along the tube (9).

3. The calibration method according to claim 1 or 2, **characterized in that** the upper part (27) of the inner space (11) is pressurized by injecting a gas.

4. The calibration method according to any one of the preceding claims, **characterized in that** the upper part (27) of the inner space (11) is successively placed at a plurality of predetermined pressures different from one another, the steps for computing a theoretical level ($N_{th}$) of the free surface (15) along the tube (11), acquiring the measured level ($N_{mes}$) of the free surface (15) measured by the measuring device (17), and comparing the theoretical level ($N_{th}$) and the measured level ($N_{mes}$) being repeated for each of said predetermined pressures.

5. The calibration method according to any one of the preceding claims, **characterized in that** the method comprises a prior operation for determining a zero point, said prior operation comprising:

- a step for placing the upper part (27) of the inner space (11) at a reference pressure ($P_{ref}$) such that the liquid is expelled from the inner space (11) up to the level of the opening (29) arranged in the tube (11);
- a step for computing a reference level difference ($\Delta Ho$) between a free surface of the liquid (3) outside the tube (9) and the opening (29), based on the reference pressure ($P_{ref}$).

6. The calibration method according to claim 5, **char-** **acterized in that** the prior operation for determining the zero point comprises a step for verifying that the level sensor (1) indicates a minimum measured level at said reference pressure ($P_{ref}$).

7. The calibration method according to any one of the preceding claims, **characterized in that** the step for computing the theoretical level ($N_{th}$) of the free surface (15) along the tube (9) comprises the following sub-steps:

- computing a liquid level difference ($\Delta H$) between the inner space (11) of the tube (9) and the liquid volume (3) based on the predetermined pressure ($P_{det}$),
- computing the liquid level in the inner space (11) of the tube (9) relative to the opening (29), based on said level difference ($\Delta H$) and a reference level difference ($\Delta Ho$) between a free surface of the liquid volume (3) outside the tube (9) and the opening (29).

8. The calibration method according to any one of the preceding claims, **characterized in that** the method further comprises a step for acquiring a temperature ($T_{liq}$) of the liquid in the liquid volume (3) and/or a gas pressure ($P_{gaz}$) above the liquid volume (3), said liquid temperature ($T_{liq}$) and/or said gas pressure ($P_{gaz}$) being used in the step for computing the theoretical level ($N_{th}$) of the free surface (15) along the tube (9).

9. The calibration method according to any one of the preceding claims, **characterized in that** the tube (9) comprises a vent (35) placing the upper part (27) of the inner space (11) of the tube (9) in communication with the atmosphere when the level sensor (1) is in use, the upper part (27) of the inner space (11) being pressurized during the calibration by connecting the vent (35) to a pressurized gas source (55).

10. The calibration method according to any one of the preceding claims, **characterized in that** the method comprises a step for verifying the response time of the level sensor (1), done by quickly modifying the pressure of the upper part (27) of the inner space (11) and tracking the evolution of the level measured by the level sensor (1) over time.

11. The calibration device according to any one of the preceding claims, **characterized in that** the liquid volume (3) is a pool of a nuclear reactor.

FIG.1

## FIG.2

## FIG.3

## RÉFÉRENCES CITÉES DANS LA DESCRIPTION

**Documents brevets cités dans la description**

- GB 1533655 A
- US 4465088 A
- FR 2694622